Europäisches Patentamt

European Patent Office

Office européen des brevets

(11) Veröffentlichungsnummer: **0 258 772**
**A2**

## (12) EUROPÄISCHE PATENTANMELDUNG

(21) Anmeldenummer: 87112244.6

(51) Int. Cl.⁴: **F16L 41/02**

(22) Anmeldetag: 24.08.87

(30) Priorität: 27.08.86 DE 3629076

(43) Veröffentlichungstag der Anmeldung:
09.03.88 Patentblatt 88/10

(84) Benannte Vertragsstaaten:
GB IT

(71) Anmelder: T. Kündahl-Weitzel KG
Binger Strasse 29
D-6507 Ingelheim(DE)

(72) Erfinder: Jost, Johannes
In der Rheingewann 77
D-6507 Ingelheim(DE)

(74) Vertreter: Hain, Leonhard, Dipl.-Ing. et al
Tal 18/IV
D-8000 München 2(DE)

(54) Rohrformstück für Rohrleitungen, insbesondere für Heizkörperanschlussleitungen.

(57) Bei einem Rohrformstück (1) für Rohrleitungen, insbesondere für Heizkörperanschlußleitungen, aus einem im Querschnitt kreisrunden Rohrstück (2) und einem Abzweigstutzen (3) weist der Abzweigstutzen (3) rechteckigen Querschnitt auf, der an seinem freien Ende wieder in einen kreisrunden Querschnitt für einen Leitungsanschluß (5) übergeht.

Fig.1

EP 0 258 772 A2

**Rohrformstück für Rohrleitungen, insbesondere für Heizkörperanschlußleitungen**

Die Erfindung betrifft ein Rohrformstück für Rohrleitungen, insbesondere für Heizkörperanschlußleitungen, gemäß dem Oberbegriff des Patentanspruches 1.

Werden Rohrleitungen zu Heizkörpern, Öl-oder Gasöfen, beispielsweise beim Sanieren von Altbauten, nachträglich verlegt, dann wird eine einfachere Aufputzverlegung gegenüber einer wesentlich aufwendigeren und kostspieligeren Unterputzverlegung meist deshalb zurückgestellt, weil die Aufputzrohrleitungen, insbesondere an den Kreuzungsstellen, sich zu weit von der Mauerwand abheben, daher zu sehr auffallen und das Aussehen des Raumes ungünstig beeinflussen. Durch bekannte Sockelverkleidungen ist es zwar möglich, die am Fußboden verlegten Rohrleitungen abzudecken, jedoch kann diese Abdeckung meist nicht auf die Abzweigungen und Kreuzungen ausgedehnt werden. Schließlich erfordert das Kreuzen einer Rohrleitung mit einem Abzweigstutzen einer anderen Rohrleitung mehrere aneinanderzufügende Rohrformstücke mit aufwendigen und komplizierten Montagearbeiten.

Der Erfindung liegt daher die Aufgabe zugrunde, ein Rohrformstück zu schaffen, mit dem auch Aufputz-Rohrverlegungen vereinfacht und - schöner ausgeführt werden können.

Diese Aufgabe wird an einem Rohrformstück gemäß dem Oberbegriff des Patentanspruches 1 erfindungsgemäß durch die Kennzeichnungsmerkmale dieses Patentanspruches gelöst.

Vorteilhafte Weiterentwicklungen sind in den Unteransprüchen beansprucht.

Durch die Verbindung eines üblichen Rohrstückes mit einem im Querschnitt rechteckigen Abzweigstutzen zu einem einbaufertigen Rohrformstück bzw. Fitting wird erreicht, daß die Rohrleitung mit einer Sockelleiste abgedeckt werden kann und der hochsteigende Abzweigstutzen wegen seiner rechteckigen flachen Querschnittsform unauffällig an der Wand über die Sockelleiste hinaus zum Heizkörper hochgeführt werden kann, insbesondere dann, wenn der Abzweigstutzen etwa tangential in das Rohrstück eindringt. Das rechteckige Abzweigstück erleichtert auch ein Überbrücken durch andere Rohrleitungen.

Besonders vorteilhaft ist ein Rohrformstück mit einem Abzweigstutzen, wenn zum Kreuzen mit einer zweiten Rohrleitung am Abzweigstutzen ein zweites, ein Zusatzrohrstück vorgesehen, zweckmäßig eingeformt ist. In diesem Fall fluchten die Außenflächen der beiden Rohrstücke miteinander und die beiden Rohrleitungen samt dieser Kreuzungsstelle können von einer Sockelleiste abgedeckt werden. Dieses Doppel-Rohrformstück kann noch dadurch erweitert werden, daß auch am Zusatzrohrstück ein im Querschnitt rechteckiger Abzweigstutzen angesetzt wird. Zweckmäßig sind die Rohrstücke von gleicher Länge und auch ihre Verbindungselemente gleich ausgebildet. Diese Rohrformstücke lassen sich günstig als Gußformstücke aus Metall oder Kunststoff herstellen. Mit einem solchen Doppel-Rohrformstück können daher mit wenig Aufwand beispielsweise Heizkörper and die Vor-und Rücklaufleitungen einer Zentralheizung angeschlossen und die Rohrleitungen auch abgedeckt werden.

Die Erfindung wird nachfolgend anhand von Ausführungsbeispielen, die auch in der Zeichnung - schematisiert dargestellt sind, näher beschrieben. Es zeigen:

Fig. 1 ein erstes Rohrformstück mit geschnittenem Rohrstück,

Fig. 2 ein weiteres Rohrformstück mit einem Zusatzrohrstück,

Fig. 3 einen Schnitt nach der Linie III-III der Fig. 2,

Fig. 4 eine Ansicht auf ein Doppel-Rohrformstück und

Fig. 5 einen Schnitt nach der Linie V-V der Fig. 4.

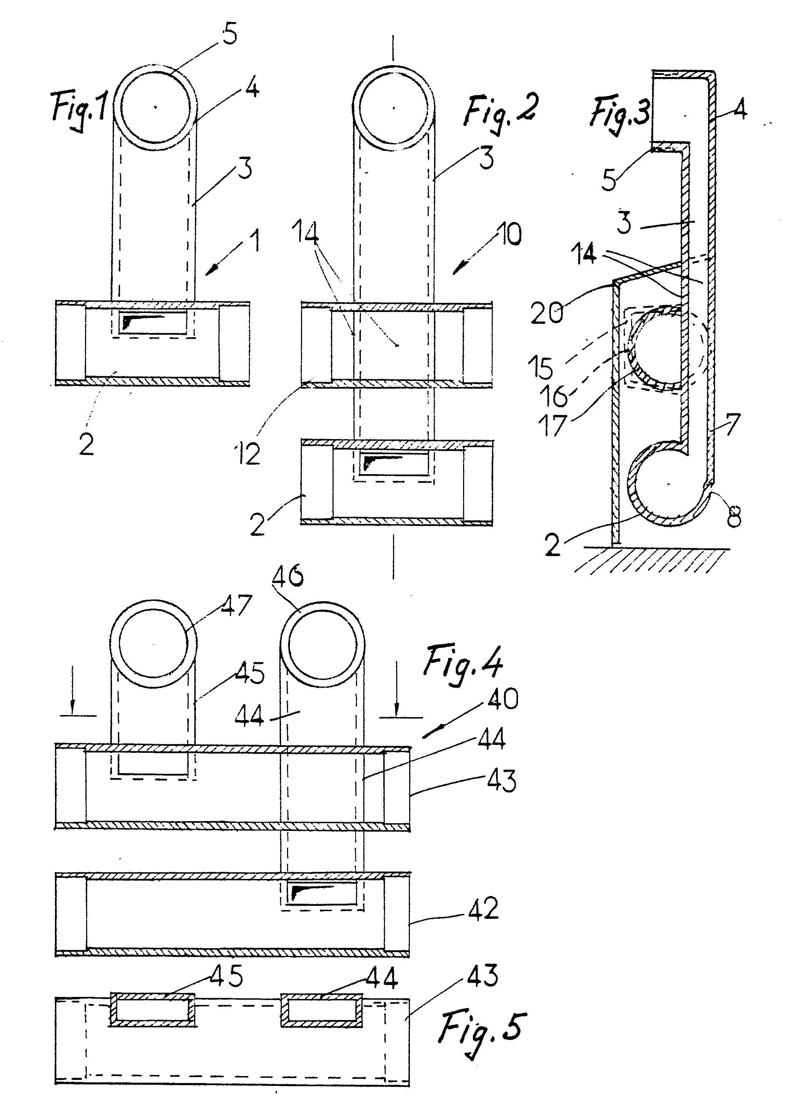

Eine einfache Form des erfindungsgemäßen Rohrformstückes 1 gemäß Fig. 1 besteht aus einem im Querschnitt kreisförmigen Rohrstück 2 und einem daran angesetzten Abzweigstutzen 3 mit rechteckigem Querschnitt. An einem Anschlußende 4 dieses Abzweigstutzens ist ein Verbindungselement 5 wiederum kreisförmig ausgebildet. Wie insbesondere aus Fig. 3 zu sehen ist, mündet der Abzweigstutzen 3 etwa tangential in das Rohrstück 2 ein, so daß die Rückflächen 7 bzw. 8 dieser beiden Formstücke miteinander fluchten bzw. sich nur geringfügig voneinander Abheben. Damit der Abzweigstutzen möglichst dicht an der Mauerwand anliegen kann, kann es zweckmäßig sein, wenn seine Rückfläche 7 sich etwas nach rückwärts abhebt.Unter Berücksichtigung günstiger Strömungsverhältnisse wird der rechteckige Abzweigstutzen 3 soweit als möglich abgeflacht und der Durchströmquerschnitt den Erfordernissen angepaßt.

In Fig. 2 ist ein Rohrformstück 10 dargestellt, das um ein Zusatzrohrstück 12 erweitert ist, das den Abzweigstutzen 3 kreuzt. Wiederum aus Fig. 3 ist zu sehen, daß das Rohrstück 12 im Kreuzungsbereich vom rechteckigen Abzweigstutzen 3 durchdrungen ist. Dabei bilden die Seiten-und Frontflächen 14 des Abzweigstutzens die Trennwand zum Durchflußraum des Rohrstückes 12. Um den Durchströmquerschnitt des Rohrstückes 12 an der Kreuzungsstelle nicht zu stark einzuschnüren, kann an dieser Stelle das Zusatzrohrstück auch zu einem Rechteck 15, in Fig. 3 gestrichelt, erweitert sein, wobei dann die Frontfläche 16 dieses Erweiterungsrechteckes nicht oder nur unmerklich über die Scheitellinie 17 des Rohrstückes 2 vorsteht. Die Rohrstücke 2, 12 sind zweckmäßig gleich lang und ihre Enden ebenfalls gleichmäßig ausgebildet, z.B. mit Verbindungsmuffen, -gewinden oder -flanschen. Auch das Verbindungselement 5 wird in geeigneter Weise, z.B. mit einem Außen gewinde, ausgebildet sein. Die Rechteckform des Abzweigstutzens wird auch dem Durchmesser dieser Verbindungselemente 5 angepaßt sein, um ein gußtechnisch günstiges Formstück zu erhalten. In Fig. 3 ist auch eine Sockelleiste 20 angedeutet, die die beiden Rohrstücke und damit die Rohrleitungen, z.B. für einen Vor-und Rücklauf, abdeckt. Für den Abzweigstutzen ist die Sockelleiste entsprechend ausgeschnitten.

In Fig. 4 ist ein weiteres Rohrformstück 40 dargestellt, das ein unteres Rohrstück 42 und ein oberes Zusatzrohrstück 43 aufweist, welch letzteres vom Abzweigstutzen 44 durchdrungen ist, wie - schon zur Fig. 2 und 3 beschrieben. Auch am Zusatzrohrstück 43 ist in diesem Fall ein Abzweigstutzen 45 angesetzt, der das Zusatzrohrstück und damit die daran angeschlossene Rohrleitung mit einem entsprechenden Anschlußgerät verbindet. Zweckmäßig sind die Verbindungselemente 46, 47 dieser beiden Abzweigstutzen auf gleicher Höhe angeordnet und demgemäß die Abzweigstutzen selbst ungleich lang. Die Enden der Rohrstücke sind beispielsweise zu Muffen ausgebildet. Die Abstände der Verbindungselemente und damit die der Abzweigstutzen sind den Anschlußarmaturen angepaßt. Danach bestimmt sich auch die Länge der Rohrstücke, in die die Abzweigstutzen zweckmäßig im gleichen Abstand von einer Symmetrieebene einmünden.

Wenn möglich, wird man die Rohrformstücke als Gußstücke herstellen. Dies schließt aber nicht aus, daß die Abzweigstücke und davon getrennt hergestellte Rohrstücke auch miteinander verschweißt, verlötet oder verklebt sein können. Auch kann es für manche Fälle zweckmäßig sein, die Rohrstücke unterschiedlich lang zu machen.

Das erfindungsgemäße Rohrformstück kann auch in Verbindung mit Unterputz oder im Boden verlegten Rohrleitungen Verwendung finden.

**Ansprüche**

1. Rohrformstück für Rohrleitungen, insbesondere für Heizkörperanschlußleitungen, mit einem im Querschnitt kreisrunden Rohrstück und einem dazu etwa rechtwinklig angesetzten Abzweigstutzen, dadurch gekennzeichnet, daß der am Rohrstück (2) angesetzte Abzweigstutzen (3) rechteckigen Querschnitt aufweist und an seinem freien Anschlußende (4) ein kreisrundes Verbindungselement (5) ausgebildet ist.

2. Rohrformstück nach Anspruch 1, dadurch gekennzeichnet, daß der Abzweigstutzen (3) etwa tangential am Rohrstück (2) angesetzt ist.

3. Rohrformstück nach Anspruch 1 oder 2, dadurch gekennzeichnet, daß die Durchströmquerschnitte des Rohrstückes (2) und des Abzweigstutzens (3) einander angepaßt sind.

4. Rohrformstück nach einem der Ansprüche 1 bis 3 für zwei etwa parallele Rohrleitungen, dadurch gekennzeichnet, daß im Abstand der beiden Rohrleitungen am Abzweigstutzen (3) ein Zusatzrohrstück (12) vorgesehen ist.

5. Rohrformstück nach Anspruch 4, dadurch gekennzeichnet, daß der Abzweigstutzen (3) in das Zusatzrohrstück (12) eingeformt ist.

6. Rohrformstück nach Anspruch 4 oder 5, dadurch gekennzeichnet, daß das Rohrstück (2) und das Zusatzrohrstück (12) etwa gleich lang und an ihren Enden gleiche Verbindungselemente ausgebildet sind.

7. Rohrformstück nach einem der Ansprüche 4 bis 6, dadurch gekennzeichnet, daß das Zusatzrohrstück (12) im Bereich einer Kreuzung mit dem Abzweigstutzen (3) zu einer Rechteckform (15) erweitert ist.

8. Rohrformstück nach einem der Ansprüche 4 bis 7, dadurch gekennzeichnet, daß am Zusatzrohrstück (43) ebenfalls ein Abzweigstutzen (45) angesetzt ist.

9. Rohrformstück nach Anspruch 8, dadurch gekennzeichnet, daß die Verbindungselemente (46, 47) der beiden Abzweigstutzen (44, 45) in der gleichen parallelen Ebene zu den Rohrstücken (42 bzw. 43) angeordnet sind.

Fig.1

Fig.2

Fig.3

Fig.4

Fig.5